(19) Europäisches Patentamt
European Patent Office
Office européen des brevets

(11) **EP 3 517 920 B1**

(12) **EUROPEAN PATENT SPECIFICATION**

(45) Date of publication and mention
of the grant of the patent:
**11.11.2020 Bulletin 2020/46**

(51) Int Cl.:
*G01L 9/00* (2006.01)          *G01L 9/06* (2006.01)
*G01L 1/22* (2006.01)

(21) Application number: **18214212.5**

(22) Date of filing: **19.12.2018**

(54) **PIEZORESISTIVE TRANSDUCER WITH JFET-BASED BRIDGE CIRCUIT**

PIEZORESISTIVER WANDLER MIT JFET-BASIERTER BRÜCKENSCHALTUNG

TRANSDUCTEUR PIÉZORÉSISTIF À CIRCUIT DE PONT BASÉ SUR JFET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2018 US 201815882004**

(43) Date of publication of application:
**31.07.2019 Bulletin 2019/31**

(73) Proprietor: **NXP USA, Inc.**
**Austin TX 78735 (US)**

(72) Inventor: **HOLM, Paige M.**
**5656 AG Eindhoven (NL)**

(74) Representative: **Hardingham, Christopher Mark**
**NXP Semiconductors**
**Intellectual Property Group**
**Abbey House**
**25 Clarendon Road**
**Redhill, Surrey RH1 1QZ (GB)**

(56) References cited:
**US-A1- 2002 003 274     US-A1- 2014 042 497**

• **PRADEEP KUMAR RATHORE ET AL: "CMOS-MEMS integrated MOSFET embedded bridge structure based pressure sensor", THE INSTITUTE OF ELECTRICAL AND ELECTRONICS ENGINEERS, INC. (IEEE) CONFERENCE PROCEEDINGS, 1 December 2013 (2013-12-01), page 1, XP055594103, Piscataway**

EP 3 517 920 B1

**Description**

**TECHNICAL FIELD OF THE INVENTION**

The present invention relates generally to piezoresistive transducers. More specifically, the present invention relates to a piezoresistive transducer having a JFET-based bridge circuit.

**BACKGROUND OF THE INVENTION**

Pressure sensors are used in a wide variety of applications including, for example, commercial, automotive, aerospace, industrial, and medical applications. One type of pressure sensor is a piezoresistive pressure sensor. A piezoresistive pressure sensor typically includes a pressure sensitive diaphragm onto which a piezoresistive bridge circuit, having a number of piezoresistors, is formed. The piezoresistors are typically placed near the edge of the diaphragm where the stress change is high under external pressure. Accordingly, external pressure applied on the diaphragm causes the diaphragm to flex or bend, which affects the resistance of the piezoresistors. The change in resistance can be detected by an electronic circuit which outputs an electrical signal representative of the applied pressure.

PRADEEP KUMAR RATHORE ET AL: "CMOS-MEMS integrated MOSFET embedded bridge structure based pressure sensor", THE INSTITUTE OF ELECTRICAL AND ELECTRONICS ENGINEERS, INC. (IEEE) CONFERENCE PROCEEDINGS, 1 December 2013, page 1, describes the design and simulation of current mirror sensing based MOSFET embedded bridge structure for high sensitivity pressure sensing. A current mirror circuit with an output current of 1 mA has been designed using standard 5 pm CMOS technology. The output transistor of the current mirror forms the active pressure sensing MOSFET which produces a change in its drain current as a result of altered channel mobility under externally applied pressure. The channel region of the pressure sensing MOSFET forms the bridge structure as well as the strain sensing element. The piezoresistive effect in MOSFET has been exploited for the calculation of strain induced carrier mobility variation. COMSOL Multiphysics is utilized for the simulation of pressure sensing bridge structure. T-Spice is employed to evaluate the characteristics of the current mirror pressure sensing circuit. Simulation results show that the MOSFET embedded bridge structure has a pressure sensitivity of 24.08 mV/MPa. An enhanced pressure sensitivity of 1.61 V/MPa is obtained after structure optimization. In addition, the variation in drain current of pressure sensing MOSFET due to the mismatch between the current mirror transistors and load resistances and variations in the supply voltage and operating temperature is also discussed. These bridge structure based MOSFET embedded pressure sensors are suitable for healthcare and biomedical applications.

US 2014/042497 A1 describes a semiconductor physical quantity sensor that includes (i) a semiconductor substrate having a first conductive type, (ii) a diaphragm portion disposed in the semiconductor substrate, (iii) a sensing portion disposed in the diaphragm portion, (iv) a well layer having a second conductive type, and (v) a back flow prevention element. The well layer is disposed in a surface portion of the semiconductor substrate, and corresponds to the diaphragm portion. The back flow prevention element is provided by a MOSFET, a JFET, a MESFET, or a HEMT. The back flow prevention element includes two second conductive diffused portions and a gate electrode. The back flow prevention element is arranged on a first electrical wiring, which provides a passage for applying a predetermined voltage to the well layer from an external circuit. The back flow prevention element turns on based on a voltage applied to the gate electrode.

US 2002/003274 A1 describes a semiconductor sensor with epi-pocket isolation. The semiconductor sensor comprises a deformable member which includes a first silicon region of a first conductivity type and a second silicon region of a second conductivity type surrounding the first silicon region. The semiconductor sensor further comprises a stress-sensitive diffused resistive element disposed on the deformable member in the first silicon region.

**SUMMARY**

According to an aspect of the invention, there is provided a piezoresistive transducer according to claim 1.
Further features according to embodiments of the invention are defined in the dependent claims.

**BRIEF DESCRIPTION OF THE DRAWINGS**

The accompanying figures in which like reference numerals refer to identical or functionally similar elements throughout the separate views, the figures are not necessarily drawn to scale, and which together with the detailed description below are incorporated in and form part of the specification, serve to further illustrate various embodiments and to explain various principles and advantages all in accordance with the present invention.

   FIG. 1 shows a simplified side view of an example of a prior art piezoresistive pressure sensor;

FIG. 2 shows a simplified top view of the piezoresistive pressure sensor of FIG. 1;
FIG. 3 shows a diagram of a bridge circuit for the piezoresistive pressure sensor of FIG. 1;
FIG. 4 shows a simplified side view of another example of a prior art piezoresistive pressure sensor;
FIG. 5 shows a simplified top view of the piezoresistive pressure sensor of FIG. 4;
FIG. 6 shows a diagram of a bridge circuit for the piezoresistive pressure sensor of FIG. 4;
FIG. 7 shows a side view of a piezoresistive transducer, and more specifically, a piezoresistive pressure sensor in accordance with an embodiment;
FIG. 8 shows a top view of the piezoresistive pressure sensor of FIG. 7;
FIG. 9 shows a diagram of a bridge circuit for the piezoresistive pressure sensor of FIG. 7;
FIG. 10 shows a simplified side view of a metal-oxide-semiconductor field-effect transistor (MOSFET) device; and
FIG. 11 shows a simplified side view of a metal-semiconductor field-effect transistor (MESFET) device.

## DETAILED DESCRIPTION

In overview, the present disclosure concerns piezoresistive transducers, and more particularly a piezoresistive pressure transducer with enhanced sensitivity. More particularly, the piezoresistive pressure transducer includes a bridge circuit configuration the includes two junction field-effect transistors (JFETs) and two piezoresistors. The JFETs and piezoresistors are located within differing high stress locations of a pressure sensitive diaphragm. The JFETs, as well as a subset of JFETs known as metal-semiconductor field-effect transistors (MESFETs), have a stress sensitive phenomenon in which the source current changes with the stress (e.g., an applied force, such as pressure) in the channel regions. Since the channel region of a JFET device lies entirely within the bulk semiconductor material, a piezoresistive response of the JFET will be identical to that of the piezoresistive response of the piezoresistors in the bridge circuit. Accordingly, the use of JFETs of MESFETs retains the bulk material properties of carrier mobility and the piezoresistive response to enable enhanced sensitivity over prior art configurations. Although embodiments discussed herein entail a piezoresistive pressure transducer, it should be understood that a bridge circuit that includes two JFETs and two piezoresistors may be adapted for use in other piezoresistive transducers that include a mechanical structure that is subject to an applied force.

The instant disclosure is provided to further explain in an enabling fashion the best modes, at the time of the application, of making and using various embodiments in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

It should be understood that the use of relational terms, if any, such as first and second, top and bottom, and the like are used solely to distinguish one from another entity or action without necessarily requiring or implying any actual such relationship or order between such entities or actions. Furthermore, some of the figures may be illustrated using various shading and/or hatching to distinguish the different elements produced within the various structural layers. These different elements within the structural layers may be produced utilizing current and upcoming microfabrication techniques of depositing, patterning, etching, and so forth. Accordingly, although different shading and/or hatching is utilized in the illustrations, the different elements within the structural layers may be formed out of the same material.

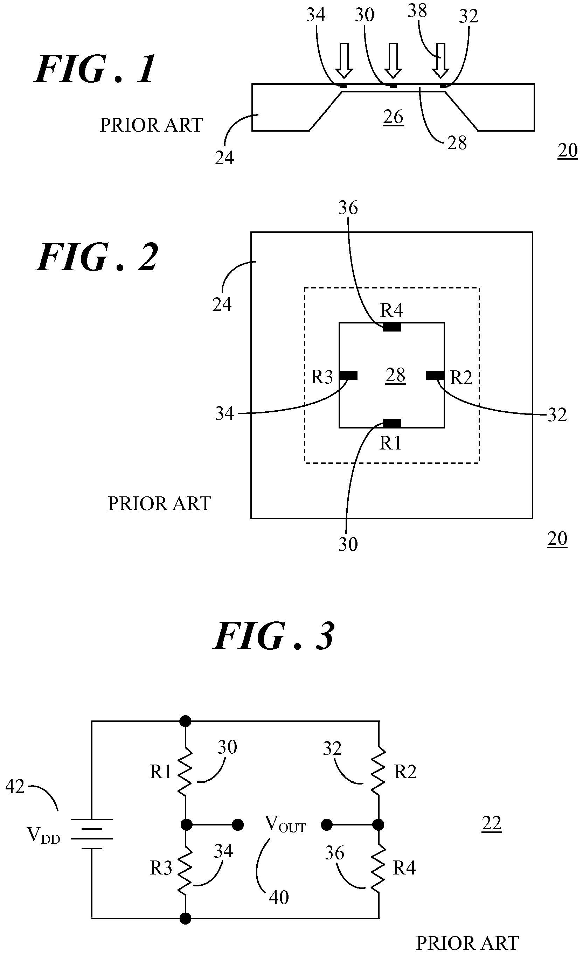

Referring to FIGs. 1-3, FIG. 1 shows a simplified side view of an example of a prior art piezoresistive pressure sensor 20, FIG. 2 shows a simplified top view of piezoresistive pressure sensor 20, and FIG. 3 shows a diagram of a bridge circuit 22 for piezoresistive pressure sensor 20. More particularly, FIGs. 1 and 2 depict a pressure sensing element of piezoresistive pressure sensor 20. It will be readily apparent that piezoresistive pressure sensor 20 may additionally include an application specific integrated circuit (ASIC) portion (not shown), and that the pressure sensing element and the ASIC may be coupled to a common base, the pressure sensing element may be fabricated and packaged separately from an associated ASIC die, or the pressure sensing element and the ASIC may be integrated in any suitable configuration.

Piezoresistive pressure sensor 20 generally includes a substrate 24 having a cavity 26. A deformable membrane, referred to herein as a diaphragm 28, is fabricated in or on substrate 24 and is suspended across cavity 26. Diaphragm 28 is shown with piezoresistors 30, 32, 34, 36 suitably oriented near each edge of diaphragm 28 where the stress levels are higher. Piezoresistors 30, 32, 34, 36 (labeled R1, R2, R3, R4) are connected into a simple Wheatstone bridge circuit, represented by bridge circuit 22, operating in a differential mode to maximize signal output. In a wide variety of packaging configurations, diaphragm 28 is exposed to an external applied pressure, represented by arrows 38. Under external applied pressure 38, diaphragm 28 deforms which changes the resistance of piezoresistors 30, 32, 34, 36. Piezoresistive pressure sensor 20 thus detects the resistance changes of piezoresistors 30, 32, 34, 36 provided in diaphragm 28 and outputs an electrical signal (e.g., a voltage output signal 40, labeled $V_{OUT}$) representative of external applied pressure 38.

In this configuration, the sensitivity of bridge circuit 22 is determined by the normalized change in resistance of the sensing elements, i.e., piezoresistors 30, 32, 34, 36. Further, the change in resistance of piezoresistors 30, 32, 34, 36 is directly related to the carrier mobility in the resistor material, which is related to the piezoresistive coefficients of the material as follows:

$$\frac{\Delta R}{R_0} = \frac{\Delta \mu_R}{\mu_R} = \pi_l \times \sigma_l + \pi_t \times \sigma_t \tag{1}$$

In equation (1), Ro is the nominal resistance of the piezoresistor when there is no applied pressure 28 and $\Delta R$ is the change in resistance under stress. Additionally, $\mu_R$ represents the resistor mobility of the piezoresistive material when there is no applied pressure 38 and $\Delta \mu_R$ represents the change in resistor mobility. The terms $\sigma_l$ and $\sigma_t$ represent the longitudinal and transverse stress in the resistor bar (i.e., piezoresistor) and the terms $\pi_l$ and $\pi_t$ are the longitudinal and transverse piezoresistive coefficients, respectively. Accordingly, the sensitivity, $S_{RES}$, of piezoresistive pressure sensor 20 is determined by:

$$S_{RES} = \frac{V_{OUT}}{V_{DD}} = \frac{\Delta \mu_R}{\mu_R} \tag{2}$$

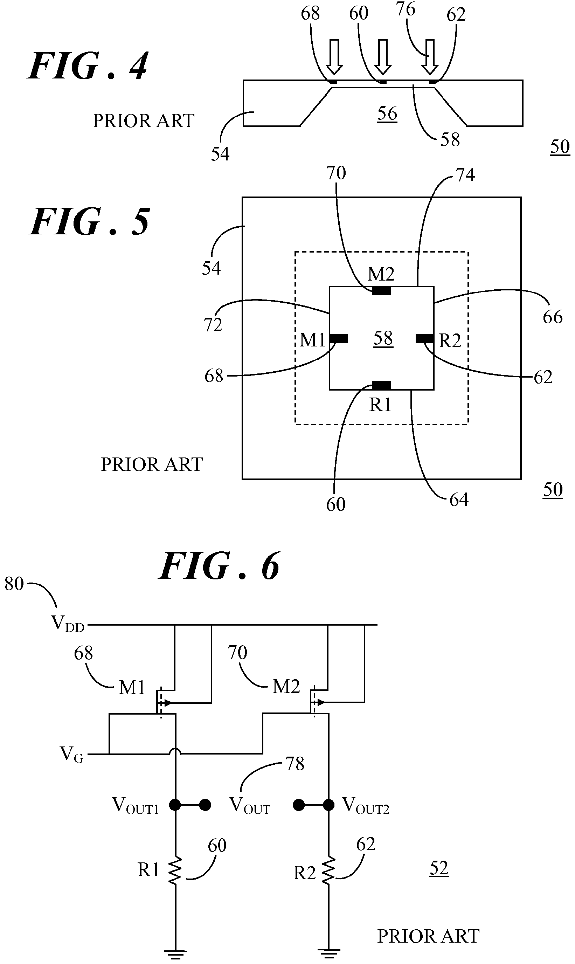

Equation (2) indicates that the sensitivity of piezoresistive pressure sensor 20 is proportional to the ratio of the voltage output 40, $V_{OUT}$, to the input, i.e., a source voltage 42, $V_{DD}$, for bridge circuit 22. Thus, as observed in equations (1) and (2), the sensitivity of piezoresistive pressure sensor 20 is directly related to the piezoresistive coefficients, $\pi_l$ and $\pi_t$.
Referring now to FIGs. 4-6, FIG. 4 shows a simplified side view of another example of a prior art piezoresistive pressure sensor 50, FIG. 5 shows a simplified top view of piezoresistive pressure sensor 50, and FIG. 6 shows a diagram of a bridge circuit 52 for piezoresistive pressure sensor 50. Piezoresistive pressure sensor 50 implements a hybrid bridge design to increase the sensitivity of piezoresistive pressure sensor 50 relative to piezoresistive pressure sensor 20 (FIG. 1). More particularly, piezoresistive pressure sensor 50 includes a substrate 54 having a cavity 56, with a diaphragm 58 fabricated in or on substrate 54 and suspended across cavity 56. Piezoresistive pressure sensor 50 includes two piezoresistors 60, 62, labeled R1 and R2, located at adjacent edges 64, 66 of diaphragm 58. Piezoresistive pressure sensor 50 additionally includes two metal-oxide semiconductor field-effect transistors (MOSFETs) 68, 70, labeled M1 and M2, located at adjacent edges 72, 74 of diaphragm 58. Thus, in piezoresistive pressure sensor 50, two piezoresistors of the piezoresistive pressure sensor configuration of FIG. 1 are replaced by MOSEFTs 68, 70.
Piezoresistors 60, 62 and MOSFETs 68, 70 are connected as represented by bridge circuit 52, operating in a differential mode to maximize signal output. Additionally, MOSFETs 68, 70 are operated in the saturation mode or region. In a wide variety of packaging configurations, diaphragm 58 is exposed to an external applied pressure, represented by arrows 76. Under external applied pressure 76, diaphragm 58 deforms which changes the resistance of piezoresistors 60, 62. MOSFETs 68, 70 also exhibit a stress sensitive phenomenon in which the source current changes with the stress in the channel region.
In a saturation mode or region, the current in MOSFETs 68, 70 is proportional to the carrier mobility, as follows:

$$I_{DS} = \frac{1}{2} \mu_{P0} C_{OX} \frac{W}{L} (V_{GS} - V_T)^2 \tag{3}$$

In equation (3), $\mu_{P0}$ is the channel carrier mobility (e.g., the mobility of p-type silicon), Cox is the capacitance of the oxide of the MOSFET, W is the width of the channel, L is the length of the channel, VGS is the gate-source voltage, and $V_T$ is the threshold voltage. When pressure 76 is applied, an additional stress in the channel is induced and the channel carrier mobility changes. The channel carrier mobility variation, $\Delta \mu_P$, is proportional to the forced stress along the crystal axes. As a result, the change of the source-drain current in the saturation mode is proportional to the stress, which may be expressed as follows:

$$\frac{\Delta I_{DS}}{I_{DS}} = \frac{\Delta \mu_P}{\mu_{P0}} = \pi_l \times \sigma_l + \pi_t \times \sigma_t \tag{4}$$

In equation (4), the terms $\sigma_l$ and $\sigma_t$ represent the longitudinal and transverse stress in the channel and the terms $\pi_l$ and $\pi_t$ are the longitudinal and transverse channel piezoresistive coefficients, respectively.
Based on the stress sensitive effect of the MOSFETs, bridge circuit 52 is produced in which two MOSFETs 68, 70 and two piezoresistors 60, 62 are connected to form a Wheatstone bridge. When there is no applied pressure 76, bridge circuit 52 is balanced, which can be expressed as follows:

$$V_0 = V_{OUT1} = V_{OUT2} \qquad (5)$$

Thus, in equation (5), $V_0$ represents the balanced output voltage prior to application of pressure 76. When pressure 76 is applied onto diaphragm 58, the current and the piezoresistance in each half of bridge circuit 52 changes in response to applied pressure 76. For example, the mobility, $\mu_P$, of MOSFET 70 and the mobility, $\mu_R$, of piezoresistor 62 may increase with the stress. In opposition, the mobility, $\mu_P$, of MOSFET 68 and the mobility, $\mu_R$, of piezoresistor 60 may decrease with the stress. Therefore, a voltage output signal, $V_{OUT}$, 78 of bridge circuit 52 can be shown to be proportional to the sum of the normalized mobility changes in both the MOSFETs 68, 70 and piezoresistors 60, 62, as follows:

$$V_{OUT} = 2 \left( \frac{\Delta \mu_P}{\mu_{P0}} + \frac{\Delta \mu_R}{\mu_{R0}} \right) \times V_0 \qquad (6)$$

Piezoresistive pressure sensor 50 thus detects the normalized mobility changes in both the MOSFETs 68, 70 and piezoresistors 60, 62 provided in diaphragm 58 and outputs an electrical signal (e.g., voltage output signal 78, labeled $V_{OUT}$) representative of external applied pressure 76.

The sensitivity, $S_{MOS}$, of piezoresistive pressure sensor 50 can be expressed as follows:

$$S_{MOS} = \frac{V_{OUT}}{V_{DD}} = 2 \left( \frac{\Delta \mu_P}{\mu_{P0}} + \frac{\Delta \mu_R}{\mu_{R0}} \right) \times \frac{V_0}{V_{DD}} \qquad (7)$$

Equation (7) indicates that the sensitivity of piezoresistive pressure sensor 50 is proportional to the ratio of the voltage output signal 78, $V_{OUT}$, to the input, i.e., a source voltage 80, labeled $V_{DD}$, for bridge circuit 52. Thus, as observed in equations (4) - (7), the sensitivity of piezoresistive pressure sensor 50 is directly related to the piezoresistive coefficients, $\pi_l$ and $\pi_t$, of MOSFETs 68, 70 and to the piezoresistive coefficients, $\pi_l$ and $\pi_t$, of piezoresistors 60, 62.

A ratio of the sensitivity of piezoresistive pressure sensor 50 to the sensitivity of piezoresistive pressure sensor 20 is:

$$\frac{S_{MOS}}{S_{RES}} = 2\alpha(1 + \beta) \text{ , where } \alpha = \frac{V_0}{V_{DD}} \qquad (8)$$

In equation (8), $\alpha$ is a circuit factor representing the bias point of bridge circuit 52, which can be adjusted by changing the device's size and process parameters. Additionally, $\beta$ is a ratio of the normalized mobilities between bridge circuit 22 and bridge circuit 52. That is, $\beta$ is a material factor symbolizing the stress sensitive degree between MOSFETs and piezoresistors. It can be observed from equation (8) that the implementation of MOSFET devices (e.g., MOSFETs 68, 70) in piezoresistive pressure sensor 50 may yield enhanced sensitivity relative to piezoresistive pressure sensor 20.

Per convention, field-effect transistors are divided into two families: junction field-effect transistors (JFETs) and insulated gate FETS (IGFETs), more commonly known as MOSFETs The term MOSFET reflects its original construction of a layer of metal (the gate), oxide (the insulation), and semiconductor. The mobility within the channel of a MOSFET device (e.g., MOSFETs 68, 70) is less than the mobility of a bulk semiconductor due to interface scattering as the carriers are pulled against the insulating oxide surface. The carriers subject to this mobility reduction due to interface scattering will not respond to piezoresistive effects in the same way that carriers in the bulk semiconductor will respond to piezoresistive effects. Accordingly, due to the nature of MOSFET devices (e.g., MOSFETs 68, 70), $\beta$ is less than unity (i.e., less than one). As such, the use of MOSFET devices in piezoresistive pressure sensor 50 introduces a mobility limitation in the sensitivity of piezoresistive pressure sensor 50.

In accordance with an embodiment, JFETs are implemented in a piezoresistive pressure sensor configuration. Unlike MOSFET devices, the JFET gate forms a p-n diode with the channel, which lies between the source and drain. Since JFET devices do not have the insulating oxide layer, JFET devices are not subject to the same mobility limitations that MOSFET devices are subject to. Thus, a JFET implementation can provide a $\beta$ value of unity (i.e., one) thereby enabling an increase in the sensitivity of the piezoresistive pressure sensor in a range of fifty to one hundred percent relative to the MOSFET-based piezoresistive pressure sensor 50. Further, a piezoresistive pressure sensor configuration that includes JFET devices may be implemented in any semiconductor technology having a bulk piezoresistive response that is also conducive to JFET transistor technology. This includes silicon and germanium technologies, as well as compound semiconductor technologies such as gallium arsenide (GaAs), indium phosphide (InP), silicon carbide (SiC), gallium nitride (GaN), and the like. Thus, a piezoresistive pressure sensor configuration that includes JFET devices may be incorporated into a wider variety of material technologies than, for example, a piezoresistive pressure sensor configuration that includes MOSFET devices.

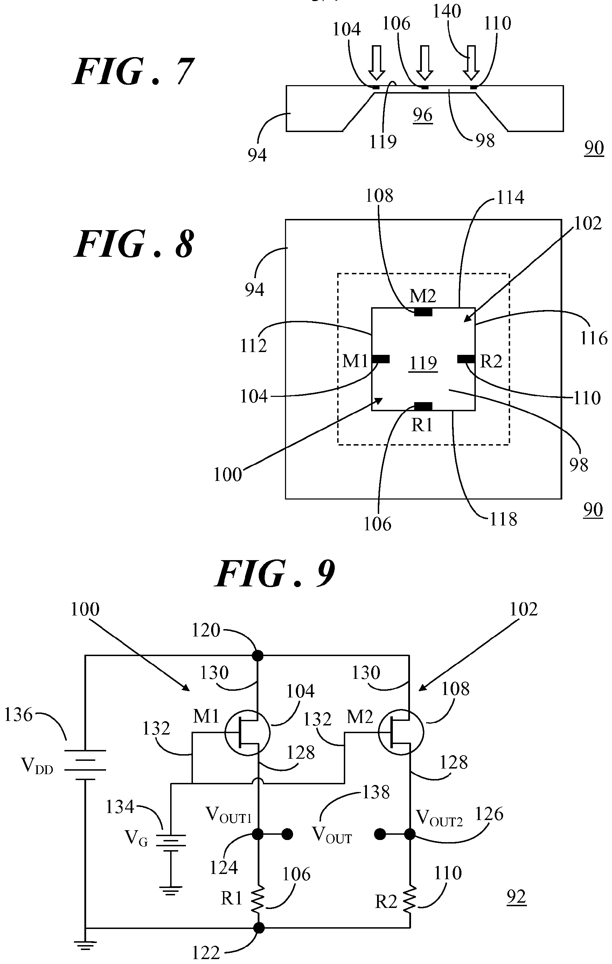

Referring now to FIGs. 7-9, FIG. 7 shows a side view of a piezoresistive transducer, and more specifically, a piezoresistive pressure sensor 90 in accordance with an embodiment. FIG. 8 shows a top view of piezoresistive pressure sensor 90, and FIG. 9 shows a diagram of a bridge circuit 92 for piezoresistive pressure sensor 90. More particularly, FIGs. 7 and 8 depict a pressure sensing element of piezoresistive pressure sensor 90. It will be readily apparent that piezoresistive pressure sensor 90 may additionally include an application specific integrated circuit (ASIC) portion (not shown), and that the pressure sensing element and the ASIC may be coupled to a common base, the pressure sensing element may be fabricated and packaged separately from the associated ASIC die, or the pressure sensing element and the ASIC may be integrated in any suitable configuration.

Piezoresistive pressure sensor 90 generally includes a substrate 94 having a cavity 96. A mechanical structure, in the form of a deformable diaphragm 98, is fabricated in or on substrate 94 and is suspended across cavity 96. Bridge circuit 92 is formed at least in part on diaphragm 98. Bridge circuit 92 includes a first half 100 and a second half 102. First half 100 of bridge circuit 92 has a first JFET 104 and a first piezoresistor 106 (labeled R1) coupled in series. Similarly, second half 102 of bridge circuit 92 has a second JFET 108 and a second piezoresistor 110 (labeled R2) coupled in series.

In an embodiment, first and second JFETs 104, 108 are metal-semiconductor FETs (MESFETs). MESFETs are JFETS in which the reverse biased p-n junction of the JFET is replaced by a metal-semiconductor junction. Hence, MESFETs 104, 108 also do not have the insulating oxide layer between the gate and the semiconductor. Therefore, MESFETs 104, 108 are not subject to the same mobility limitations that MOSFET devices are subject to. For clarity, JFETs 104, 108 are referred to hereinafter as first and second MESFETs 104, 108, labeled M1 and M2, respectively. However, alternative embodiments may include conventional JFETs or other FETS within the family of JFETs that do not have an insulating dielectric (e.g., oxide) layer between the gate and the semiconductor.

In an embodiment, diaphragm 98 has first, second, third, and fourth edges 112, 114, 116, 118 adjoining one another such that first and third edges 112, 116 oppose one another across a surface 119 of diaphragm 98 and second and fourth edges 114, 118 oppose one another across surface 119 of diaphragm 98. First MESFET 104 is formed at first edge 112, second MESFET is formed at second edge 114, second piezoresistor 110 is formed at third edge 116, and first piezoresistor 106 is formed at fourth edge 118. Thus, piezoresistive pressure sensor 90 includes first and second MESFETs 104, 108 suitably oriented at adjacent edges 112, 114 of diaphragm 98 and first and second piezoresistors 106, 110 suitably oriented adjacent edges 118, 116 of diaphragm 98 where the stress levels are higher. Other locations for MESFETS 104, 108 and piezoresistors 106, 110 may alternatively be envisioned.

First half 100 of bridge circuit 92 is coupled in parallel with second half 102 of bridge circuit 92 such that a first node 120 between first and second MESFETs 104, 108 forms a first input terminal and a second node 122 between first and second piezoresistors forms a second input terminal. Additionally, a third node 124 between first MESFET 104 and first piezoresistor 106 forms a first output terminal and a fourth node 126 between second MESFET 108 and second piezoresistor 110 forms a second output terminal.

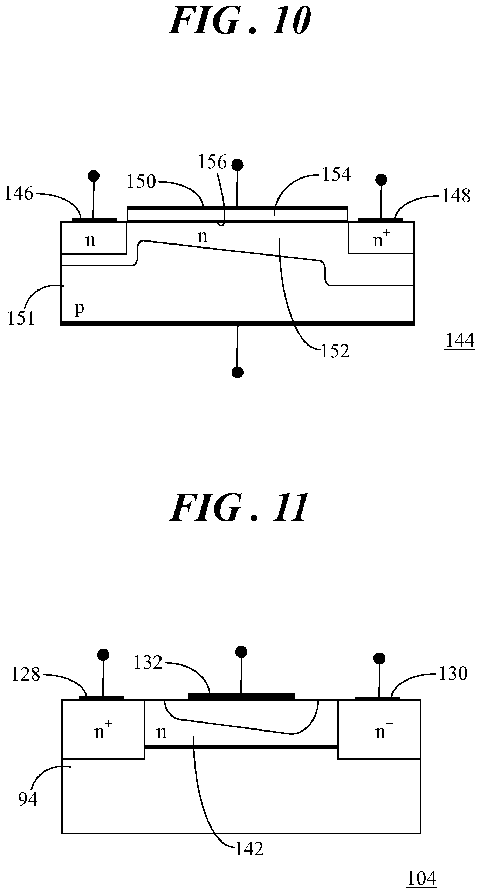

In accordance with an embodiment, substrate 94 comprises at least one of silicon, germanium, gallium arsenide (GaAs), indium phosphide (InP), silicon carbide (SiC), gallium nitride (GaN), and the like. Each of first and second MESFETs 104, 108 includes a source 128, a drain 130, and a gate 132 formed on substrate 94, with gate 132 being interposed between source 128 and drain 130 (see FIG. 11). Drain 130 of each of first and second MESFETs 104, 108 is coupled with first node 120. Source 128 of first MESFET 104 is coupled with third node 124 and source 128 of second MESFET 108 is coupled with fourth node 126. Gate 132 of each of first and second MESFETs 104, 108 is coupled to a gate voltage element 134, labeled VG. First and second nodes 120, 122 (as first and second input terminals) are coupled to a source voltage element 136, labeled $V_{DD}$. Third and fourth nodes 124, 126 (as first and second output terminals) provide an electrical signal (e.g., a voltage output signal 138, labeled $V_{OUT}$) across the first and second output terminals indicative of a force, e.g., external pressure 140 (denoted by arrows in FIG. 7), applied to diaphragm 98.

In accordance with an embodiment, first and second MESFETS 104, 108 have the same structural parameters, such as width, W, and length, L, of a channel region 142 (see FIG. 11) between source 128 and drain 130. Additionally, first and second MESFETs 104, 108 are configured to have the same pinch-off voltage, and the same gate-source voltage, VGS, where the gate-source voltage is equal to the difference between the gate voltage and the source voltage (i.e., $V_{GS}=V_G-V_{DD}$). Further, first and second MESFETs 104, 108 are configured to be operated in a saturation mode, i.e., in the saturation region. Still further, gate 132 of each of first and second MESFETs 104, 108 are formed on a surface of the semiinsulating substrate 94 without an intervening piezoelectric material layer so that piezoresistive pressure sensor 90 exhibits a piezoresistive response, rather than a piezoelectric response. First and second piezoresistors 106, 110 additionally have the same baseline resistance parameter, $R_0$.

In response to an applied force, e.g., external pressure 140, a current in each of first and second MESFETs 104, 108 changes in proportion to a change in channel mobility of first and second MESFETs 104, 108. Similar to MOSFETs 68, 70 (FIG. 6) discussed above, the channel mobility of first and second MESFETs 104, 108 is responsive to the piezoresistive response of first and second MESFETs 104, 108 to the applied pressure 140 in accordance with equations (3)-(6). In response to the applied force (e.g., external pressure 140) the piezoresistive response of first and second piezoresistors 106, 110 changes in proportion to a change in resistor mobility of first and second piezoresistors 106, 110 in accordance with equation (1).

Referring now to FIGs. 10 and 11, FIG. 10 shows a simplified side view of a metal-oxide-semiconductor field-effect transistor (MOSFET) device 144 and FIG. 11 shows a simplified side view of a metal-semiconductor field-effect transistor (MESFET) device. In order to provide correspondence with piezoresistive pressure sensor 90, FIG. 11 is described in connection with first MESFET 104. However, the following discussion applied equivalently to second MESFET 108.

MOSFET device 144 includes a source 146, a drain 148, and an insulated gate 150 interposed between source 146 and drain 148, whose voltage determines the conductivity of MOSFET 144, formed on a substrate 151. A conducting channel region 152 extends between source 146 and drain 148. Gate 150 includes a dielectric material layer, sometimes referred to as a gate oxide 154, although other insulating dielectric materials may be implemented. In MOSFET device 144, current flows between source 146 and drain 148 through an inversion layer (channel region 152) formed at a surface 156 of gate oxide 154. Surface 156 of gate oxide 154 can be rough, on a microscopic scale. This roughness can result in a surface scattering component that degrades the carrier mobility and therefore the piezoresistive response of channel region 152 of MOSFET device 144 compared to bulk values of substrate 151. Thus, interface scattering within the inversion layer forming channel region 152 results in the factor, $\beta$, presented in equation (8) being less than one.

On the other hand, channel region 142 of MESFET device 104 lies entirely within the bulk semiconductor material 94. MESFET device 104 is therefore effectively a gated resistor and its piezoresistive response will be identical to that of the bulk resistors used to form conventional piezoresistive transducer bridge circuits (e.g., bridge circuit 22 of piezoresistive pressure sensor 20). In other words, channel formation within the bulk semiconductor material (e.g., substrate 94) enables retention of carrier mobility and piezoresistive properties of substrate 94. This means that the factor, $\beta$, will be unity (i.e., one) for the MESFET-based piezoresistive pressure sensor 90 (FIGs. 7-9). Accordingly, the sensitivity, $S_{MES}$, may be greater by as much as a factor of two as compared to the MOSFET-based piezoresistive pressure sensor 50 (FIGs. 4-6).

## Claims

1. A piezoresistive transducer, comprising:

   a substrate (94, 151) having a mechanical structure (98) that is subject to an applied force; and
   a bridge circuit (92) formed at least in part on the mechanical structure (98), the bridge circuit (92) including a first half (100) and a second half (102), **characterized in that** the first half (100) of the bridge circuit (92) comprises a first junction field-effect transistor, JFET, (104) and a first piezoresistor (106) coupled in series, and the second half (102) of the bridge circuit (92) comprises a second JFET (108) and a second piezoresistor (110) coupled in series.

2. The piezoresistive transducer of claim 1, wherein the first half (100) of the bridge circuit (92) is coupled in parallel with the second half (102) of the bridge circuit (92) such that a first node (120) between the first and second JFETs (104, 108) forms a first input terminal, a second node (122) between the first and second piezoresistors (106, 110) forms a second input terminal, a third node (124) between the first JFET (104) and the first piezoresistor (106) forms a first output terminal, and a fourth node (126) between the second JFET (108) and the second piezoresistor (110) forms a second output terminal.

3. The piezoresistive transducer of claim 2, wherein each of the first and second JFETs (104, 108) comprises:

   a source (128) coupled with a corresponding one of the third and fourth nodes (124, 126);
   a drain (130) coupled with the first node (120); and
   a gate (132) coupled to a gate voltage element (134).

4. The piezoresistive transducer of claim 2 or claim 3, wherein the first and second input terminals are coupled to a source voltage element (136), and the first and second output terminals provide an output voltage (138) across the first and second output terminals indicative of the applied force.

5. The piezoresistive transducer of any preceding claim, wherein the first and second JFETs (104, 108) are configured to be operated in a saturation mode.

6. The piezoresistive transducer of any preceding claim, wherein:

   the first JFET (104) is a first metal-semiconductor field-effect transistor, MESFET (104); and
   the second JFET (108) is a second MESFET (108).

7. The piezoresistive transducer of claim 6, wherein the first and second MESFETs are configured to be operated in a saturation mode.

8. The piezoresistive transducer of any preceding claim, wherein:

   in response to the applied force, a current in each of the first and second JFETs (104, 108) changes in proportion to a change in channel mobility of the first and second JFETs (104, 108), the channel mobility being responsive to a first piezoresistive response of the first and second JFETs (104, 108) to the applied force; and
   in response to the applied force, a second piezoresistive response of the first and second piezoresistors (106, 110) changes in proportion to a change in resistor mobility of the first and second piezoresistors (106, 110).

9. The piezoresistive transducer of any preceding claim, wherein the substrate (94, 151) comprises at least one of silicon, germanium, gallium arsenide (GaAs), indium phosphide (InP), silicon carbide (SiC), and gallium nitride (GaN).

10. The piezoresistive transducer of any preceding claim, wherein each of the first and second JFETs (104, 108) comprises a source (128), a drain (130), and a gate (132) formed on the substrate (94, 151), wherein the gate (132) is formed on a surface of the substrate (94, 151) without an intervening piezoelectric material layer.

11. The piezoresistive transducer of any preceding claim, wherein the piezoresistive transducer comprises a pressure sensor, the mechanical structure comprises a diaphragm (98), and the applied force is an applied pressure (140).

12. The piezoresistive transducer of claim 11, wherein the diaphragm (98) has first, second, third, and fourth edges (112 - 118) adjoining one another, such that the first and third edges (112, 116) oppose one another across a surface of the diaphragm (98) and the second and fourth edges (114, 118) oppose one another across the surface of the diaphragm (98), and wherein the first JFET (104) is formed at the first edge (112), the second JFET (108) is formed at the second edge (114), the second piezoresistor (110) is formed at the third edge (116), and the first piezoresistor (106) is formed at the fourth edge (118).

**Patentansprüche**

1. Piezoresistiver Wandler, der Folgendes umfasst:

   ein Substrat (94, 151) mit einer mechanischen Struktur (98), die einer ausgeübten Kraft unterworfen ist; und
   eine Brückenschaltung (92), die wenigstens teilweise auf der mechanischen Struktur (98) gebildet ist, wobei die Brückenschaltung (92) eine erste Hälfte (100) und eine zweite Hälfte (102) aufweist, **dadurch gekennzeichnet, dass** die erste Hälfte (100) der Brückenschaltung (92) einen ersten Sperrschichtfeldeffekttransitor, JFET, (104) und einen ersten Piezowiderstand (106), die in Reihe geschaltet sind, umfasst und die zweite Hälfte (102) der Brückenschaltung (92) einen zweiten JFET (108) und einen zweiten Piezowiderstand (110), die in Reihe geschaltet sind, umfasst.

2. Piezoresistiver Wandler nach Anspruch 1, wobei die erste Hälfte (100) der Brückenschaltung (92) zu der zweiten Hälfte (102) der Brückenschaltung (92) parallel geschaltet ist, derart, dass ein erster Knoten (120) zwischen dem ersten und dem zweiten JFET (104, 108) einen ersten Eingangsanschluss bildet, ein zweiter Knoten (122) zwischen dem ersten und dem zweiten Piezowiderstand (106, 110) einen zweiten Eingangsanschluss bildet, ein dritter Knoten (124) zwischen dem ersten JFET (104) und dem ersten Piezowiderstand (106) einen ersten Ausgangsanschluss bildet und ein vierter Knoten (126) zwischen dem zweiten JFET (108) und dem zweiten Piezowiderstand (110) einen zweiten Ausgangsanschluss bildet.

3. Piezoresistiver Wandler nach Anspruch 2, wobei der erste und der zweite JFET (104, 108) Folgendes umfassen:

eine Source (128), die mit einem Entsprechenden des dritten und des vierten Knotens (124, 126) gekoppelt ist;

einen Drain (130), der mit dem ersten Knoten (120) gekoppelt ist; und

ein Gate (132), das mit einem Gate-Spannungselement (134) gekoppelt ist.

4. Piezoresistiver Wandler nach Anspruch 2 oder Anspruch 3, wobei der erste und der zweite Eingangsanschluss mit einem Source-Spannungselement (136) gekoppelt sind und der erste und der zweite Ausgangsanschluss eine Ausgangsspannung (138) über dem ersten und dem zweiten Ausgangsanschluss, die die ausgeübte Kraft angibt, bereitstellen.

5. Piezoresistiver Wandler nach einem vorhergehenden Anspruch, wobei der erste und der zweite JFET (104, 108) konfiguriert sind, in einer Sättigungsbetriebsart betrieben zu werden.

6. Piezoresistiver Wandler nach einem vorhergehenden Anspruch, wobei:

der erste JFET (104) ein erster Metall-Halbleiter-Feldeffekttransistor, MESFET, (104) ist; und

der zweite JFET (108) ein zweiter MESFET (108) ist.

7. Piezoresistiver Wandler nach Anspruch 6, wobei der erste und der zweite MESFET konfiguriert sind, in einer Sättigungsbetriebsart betrieben zu werden.

8. Piezoresistiver Wandler nach einem vorhergehenden Anspruch, wobei:

in Reaktion auf die ausgeübte Kraft sich ein Strom in dem ersten und in dem zweiten JFET (104, 108) proportional zu einer Änderung der Kanalbeweglichkeit des ersten und des zweiten JFET (104, 108) ändert, wobei die Kanalbeweglichkeit auf eine erste piezoresistive Antwort des ersten und des zweiten JFET (104, 108) auf die ausgeübte Kraft eine Antwort darstellt; und

in Reaktion auf die ausgeübte Kraft sich eine zweite piezoresistive Antwort des ersten und des zweiten Piezowiderstands (106, 110) proportional zu einer Änderung der Widerstandsbeweglichkeit des ersten und des zweiten Piezowiderstands (106, 110) ändert.

9. Piezoresistiver Wandler nach einem vorhergehenden Anspruch, wobei das Substrat (94, 151) wenigstens eines der folgenden Materialien enthält: Silicium, Germanium, Galliumarsenid (GaAs), Indiumphosphit (InP), Siliciumcarbid (SiC) und Galliumnitrid (GaN).

10. Piezoresistiver Wandler nach einem vorhergehenden Anspruch, wobei der erste und der zweite JFET (104, 108) eine Source (128), einen Drain (130) und ein Gate (132), die auf dem Substrat (94, 151) gebildet sind, enthalten, wobei das Gate (132) auf einer Oberfläche des Substrats (94, 151) ohne eine dazwischen befindliche Schicht aus einem piezoelektrischen Material gebildet ist.

11. Piezoresistiver Wandler nach einem vorhergehenden Anspruch, wobei der piezoresistive Wandler einen Drucksensor umfasst, die mechanische Struktur eine Membran (98) umfasst und die ausgeübte Kraft ein ausgeübter Druck (140) ist.

12. Piezoresistiver Wandler nach Anspruch 11, wobei die Membran (98) eine erste, eine zweite, eine dritte und eine vierte Kante (112-118) besitzt, die aneinandergrenzen, derart, dass die erste und die dritte Kante (112, 116) einander über eine Oberfläche der Membran (98) gegenüberliegen und die zweite und die vierte Kante (114, 118) einander über die Oberfläche der Membran (98) gegenüberliegen, und wobei der erste JFET (104) bei der ersten Kante (112) gebildet ist, der zweite JFET (108) bei der zweiten Kante (114) gebildet ist, der zweite Piezowiderstand (110) bei der dritten Kante (116) gebildet ist und der erste Piezowiderstand (106) bei der vierten Kante (118) gebildet ist.

**Revendications**

1. Transducteur piézo-résistif, comprenant :

un substrat (94, 151) ayant une structure mécanique (98) qui est soumise à une force appliquée ; et

un circuit à pont (92) formé au moins en partie sur la structure mécanique (98), le circuit à pont (92) incluant une première moitié (100) et une seconde moitié (102), **caractérisé en ce que**

la première moitié (100) du circuit à pont (92) comprend un premier transistor à effet de champ à jonction, JFET, (104) et une première piézo-résistance (106) couplés en série, et la seconde moitié (102) du circuit à pont (92) comprend un second JFET (108) et une seconde piézo-résistance (110) couplés en série.

2. Transducteur piézo-résistif selon la revendication 1, dans lequel la première moitié (100) du circuit à pont (92) est couplée en parallèle à la seconde moitié (102) du circuit à pont (92) de telle sorte qu'un premier nœud (120) entre les premier et second JFETs (104, 108) forme une première borne d'entrée, qu'un deuxième nœud (122) entre les première et seconde piézo-résistances (106, 110) forme une seconde borne d'entrée, qu'un troisième nœud (124) entre le premier JFET (104) et la première piézo-résistance (106) forme une première borne de sortie, et qu'un quatrième nœud (126) entre le second JFET (108) et la seconde piézo-résistance (110) forme une seconde borne de sortie.

3. Transducteur piézo-résistif selon la revendication 2, dans lequel chacun des premier et second JFETs (104, 108) comprend :

une source (128) couplée à un correspondant des troisième et quatrième nœuds (124, 126) ;
un drain (130) couplé au premier nœud (120) ; et
une grille (132) couplée à un élément à tension de grille (134).

4. Transducteur piézo-résistif selon la revendication 2 ou la revendication 3, dans lequel les première et seconde bornes d'entrée sont couplées à un élément à tension de source (136), et les première et seconde bornes de sortie fournissent une tension de sortie (138) sur les première et seconde bornes de sortie indicative de la force appliquée.

5. Transducteur piézo-résistif selon une quelconque revendication précédente, dans lequel les premier et second JFETs (104, 108) sont configurés pour être mis en fonctionnement dans un mode de saturation.

6. Transducteur piézo-résistif selon une quelconque revendication précédente, dans lequel :

le premier JFET (104) est un premier transistor à effet de champ à semi-conducteur métallique, MESFET (104) ; et
le second JFET (108) est un second MESFET (108).

7. Transducteur piézo-résistif selon la revendication 6, dans lequel les premier et second MESFETs sont configurés pour être mis en fonctionnement dans un mode de saturation.

8. Transducteur piézo-résistif selon une quelconque revendication précédente, dans lequel :

en réponse à la force appliquée, un courant dans chacun des premier et second JFETs (104, 108) change proportionnellement à un changement de mobilité de canal des premier et second JFETs (104, 108), la mobilité de canal étant réactive à une première réponse piézo-résistive des premier et second JFETs (104, 108) à la force appliquée ; et
en réponse à la force appliquée, une seconde réponse piézo-résistive des première et seconde piézo-résistances (106, 110) change proportionnellement à un changement de mobilité de résistance des première et seconde piézo-résistances (106, 110).

9. Transducteur piézo-résistif selon une quelconque revendication précédente, dans lequel le substrat (94, 151) comprend au moins un de : silicium, germanium, arséniure de gallium (GaAs), phosphure d'indium (InP), carbure de silicium (SiC), et nitrure de gallium (GaN).

10. Transducteur piézo-résistif selon une quelconque revendication précédente, dans lequel chacun des premier et second JFETs (104, 108) comprend une source (128), un drain (130), et une grille (132) formés sur le substrat (94, 151), dans lequel la grille (132) est formée sur une surface du substrat (94, 151) sans couche de matériau piézo-électrique intervenante.

11. Transducteur piézo-résistif selon une quelconque revendication précédente, dans lequel le transducteur piézo-résistif comprend un capteur de pression, la structure mécanique comprend un diaphragme (98), et la force appliquée est une pression appliquée (140).

**12.** Transducteur piézo-résistif selon la revendication 11, dans lequel le diaphragme (98) a des premier, deuxième, troisième, et quatrième bords (112 - 118) contigus les uns aux autres, de telle sorte que les premier et troisième bords (112, 116) soient opposés l'un à l'autre sur une surface du diaphragme (98) et les deuxième et quatrième bords (114, 118) soient opposés l'un à l'autre sur la surface du diaphragme (98), et dans lequel le premier JFET (104) est formé au premier bord (112), le deuxième JFET (108) est formé au deuxième bord (114), la deuxième piézo-résistance (110) est formée au troisième bord (116), et la première piézo-résistance (106) est formée au quatrième bord (118).

## FIG . 1

PRIOR ART

## FIG . 2

PRIOR ART

## FIG . 3

PRIOR ART

# FIG . 4

PRIOR ART

# FIG . 5

PRIOR ART

# FIG . 6

PRIOR ART

**FIG. 7**

**FIG. 8**

**FIG. 9**

# FIG . 10

146

150    156    154

148

n⁺    n    n⁺

151    p

152

144

# FIG . 11

128    132    130

n⁺    n    n⁺

94

142

104

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014042497 A1

- US 2002003274 A1

### Non-patent literature cited in the description

- **PRADEEP KUMAR RATHORE et al.** CMOS-MEMS integrated MOSFET embedded bridge structure based pressure sensor. *THE INSTITUTE OF ELECTRICAL AND ELECTRONICS ENGINEERS, INC. (IEEE) CONFERENCE PROCEEDINGS,* 01 December 2013, 1